# FASCICULE DE BREVET EUROPEEN

(11) **EP 0 599 670 B1**
(45) Date de publication et mention de la délivrance du brevet: **20.11.1996**
(21) Numéro de dépôt: 93402301.1
(22) Date de dépôt: 21.09.1993
(51) Int. Cl.: B23Q 1/25

(54) **Fraiseuse-aléseuse à portique**
Portale Fräs- und Bohrmaschine
Gantry milling and boring machine

(30) Priorité: 29.09.1992 FR 9211609
(43) Date de publication de la demande: 01.06.1994
(73) Titulaire: HELIS S.A., F-06530 Peymeinade (FR)
(72) Inventeur: Line, Henri, F-06530 Peymeinade (FR)
(74) Mandataire: Hasenrader, Hubert

(56) Documents cités:
- EP-A- 0 379 877
- DE-A- 3 203 370

## Description

La présente invention concerne le domaine des machines-outils à portique.

Elle concerne plus précisément une fraiseuse-aléseuse verticale à portique comprenant une table inférieure destinée à supporter les pièces à usiner, un portique comportant deux montants disposés de part et d'autre de la table, et une entretoise reliant les extrémités supérieures desdits montants, une traverse supportée par ledit portique et mobile verticalement le long desdits montants, un chariot supporté par ladite traverse et mobile horizontalement et un organe porte-outil monté mobile verticalement sur ledit chariot, ladite table et ledit portique étant susceptibles de se déplacer l'un par rapport à l'autre.

On connaît des fraiseuses-aléseuses verticales à portique construites avec une traverse fixe et une tête d'usinage à grande course. Cette conception est économique mais elle limite les capacités d'utilisation des machines ; ainsi, il est impossible d'utiliser des outils longs sur des pièces de grande hauteur par manque de course de dégagement sous la traverse. Il y a également une diminution du passage sous broche dès que l'on veut adapter une tête mono ou birotative dont l'encombrement en hauteur est de l'ordre de 500 à 700 mm, ou un décalage de la course d'utilisation d'un renvoi d'angle adaptable.

Pour éviter les limitations des capacités des machines à traverse fixe, les constructeurs ont proposé des machines à traverse mobile (voir par exemple EP-A-0379877). La traverse, qui supporte et guide la tête d'usinage, se déplace le long des deux montants du portique : elle est guidée par des glissières de précision et généralement entraînée par des systèmes vis/écrous. Elle peut être bloquée en position sur les montants ou rester sous contrôle pendant le travail ce qui nécessite des chaînes cinématiques très rigides.

Cette conception a au moins deux inconvénients importants.

Tout d'abord, la traverse n'est supportée qu'au niveau des montants et doit donc être conçue avec un caisson de très forte section de façon à limiter les déformations liées au déplacement de la tête d'usinage, et dues aux efforts de flexion et de torsion. Avec un portique de dimensions données, la forte section de la traverse entraîne une limitation de la section de l'entretoise qui relie les deux montants ce qui affaiblit le portique.

Pour éviter ce défaut, il faut augmenter la profondeur des montants. Il en résulte une augmentation de poids du portique.

Enfin, les solutions employées - traverse mobile avec caisson, portique plus lourd, guidage de précision - conduisent à une augmentation considérable du prix, de l'ordre de 20 à 30 % par rapport aux machines-outils à traverse fixe.

La présente invention a pour but de proposer une fraiseuse-aléseuse verticale à portique dans laquelle la traverse peut prendre au moins deux positions fixes en hauteur de façon à mieux utiliser les outils ou outillages amovibles et à ne pas limiter les capacités d'utilisation de la machine, cette traverse faisant corps avec le portique pendant le travail, afin d'en assurer la rigidité.

Le but est atteint selon l'invention par le fait que l'entretoise présente une face avant plane située dans le plan des faces avant des montants par le fait que la traverse est déplaçable verticalement uniquement le long de la face avant de ladite entretoise et par le fait que la face arrière de ladite traverse est maintenue en appui sur la face avant de l'entretoise et sur les faces avant des montants, au moins pendant les phases d'usinage, par des moyens de blocage.

Grâce à cette structure, la traverse fait corps avec le portique pendant le travail des pièces à usiner et la machine-outil présente alors la rigidité d'une machine à traverse fixe traditionnelle sans augmentation excessive du poids du portique. En outre, la possibilité de déplacer verticalement la traverse permet d'utiliser différents types d'outillage en fonction de la hauteur des pièces à usiner.

De manière à éviter le basculement de l'organe porte-outil, qui est très lourd, pendant le déplacement de la traverse c'est-à-dire pendant tout le temps où elle est désolidarisée du portique, le portique comporte de plus des moyens de soutien de l'organe porte-outil, destinés à supporter le poids de l'organe porte-outil pendant le déplacement vertical de ladite traverse.

Cette disposition permet en outre de soulager le mécanisme d'entraînement de la traverse.

Avantageusement, il est prévu des butées mécaniques positives pour délimiter la course verticale de la traverse et pour assurer un positionnement précis de la traverse dans ses deux configurations extrêmes d'usinage.

Les moyens de blocage comportent une pluralité de lignes de vérins réparties le long de la traverse, lesdits vérins actionnant des têtes de serrage susceptibles de coulisser dans des rainures verticales pendant le déplacement vertical de la traverse.

D'autre avantages et caractéristiques d'une forme d'exécution de l'invention ressortiront à la lecture de la description suivante fait à titre d'exemple et en référence aux dessins annexés dans lesquels :
la figure 1 est une vue en élévation de la fraiseuse-aléseuse verticale à portique selon l'invention,
la figure 2 est une vue latérale de la fraiseuse-aléseuse de la figure 1,
la figure 3 est une vue frontale du portique seul,
la figure 4 montre les moyens de soutien de l'organe porte-outil selon un premier mode de réalisation, la traverse étant montrée en position basse, en traits pleins et en position haute en pointillé,
la figure 5 montre les moyens de soutien de l'organe porte-outil selon un deuxième mode de réalisation, la traverse étant montrée en position haute, en traits pleins et en position basse en pointillé.

La fraiseuse-aléseuse verticale à portique représentée sur les dessins comporte deux montants verticaux 1a, 1b, disposés de part et d'autre d'une table 2 montée coulissante sur un bâti 3 et destinée à supporter une pièce à usiner non représentée sur les dessins.

Les extrémités supérieures des montants 1a, 1b sont reliées entre elles par une entretoise rigide 4, de grande section, qui présente une face avant 5 plane située dans le plan des faces avant 6a, 6b des montants 1a, 1b.

Le portique 7 constitué par les montants 1a, 1b et l'entretoise 4 supporte une traverse 8 disposée sur l'avant du portique 7 et qui est déplaçable verticalement le long de la face avant 5 de l'entretoise 4. Cette traverse 8 est munie sur sa face avant de glissières horizontales 9a, 9b pour le support et le guidage d'un chariot 10 sur lequel est monté un organe porte-outil 11 mobile verticalement.

La traverse 8 a une section constante sur toute sa longueur et sa face arrière plane 12 est en appui sur les faces avant 5 de l'entretoise 4, au moins pendant le travail de la pièce à usiner, grâce à des moyens de blocage 13.

Ces moyens de blocage 13 comportent des vérins de blocage disposés en lignes verticales sur la face avant du portique 7 et qui actionnent des têtes de blocage 15 permettant, par l'intermédiaire de rainures verticales 16 ménagées dans la traverse 8, un blocage extrêmement puissant de la traverse 8 sur le portique 7. La face avant des vérins comporte une rondelle facilement démontable qui permet, après mesure des défauts et rectification, de réaliser rapidement les précisions de la face avant de la traverse 8 et donc du déplacement de l'organe porte-outil 11.

Le nombre de lignes de vérins est fonction de la longueur de la traverse. Chaque ligne de vérins comporte par exemple quatre vérins 14a, 14b, 14c et 14d. Les vérins 14a et 14c permettent de bloquer la traverse 8 en position haute. Les vérins 14b et 14d permettent de bloquer la traverse 8 en position basse. La course maximum de la traverse 8 est délimitée au moyen de butées positives supérieures et inférieures non représentées sur les dessins.

Afin d'éviter le basculement de l'organe porte-outil 11 pendant le déplacement vertical de la traverse 8, il est prévu de faire supporter cet organe porte-outil 11 par le portique 7 à l'aide de moyens de soutien.

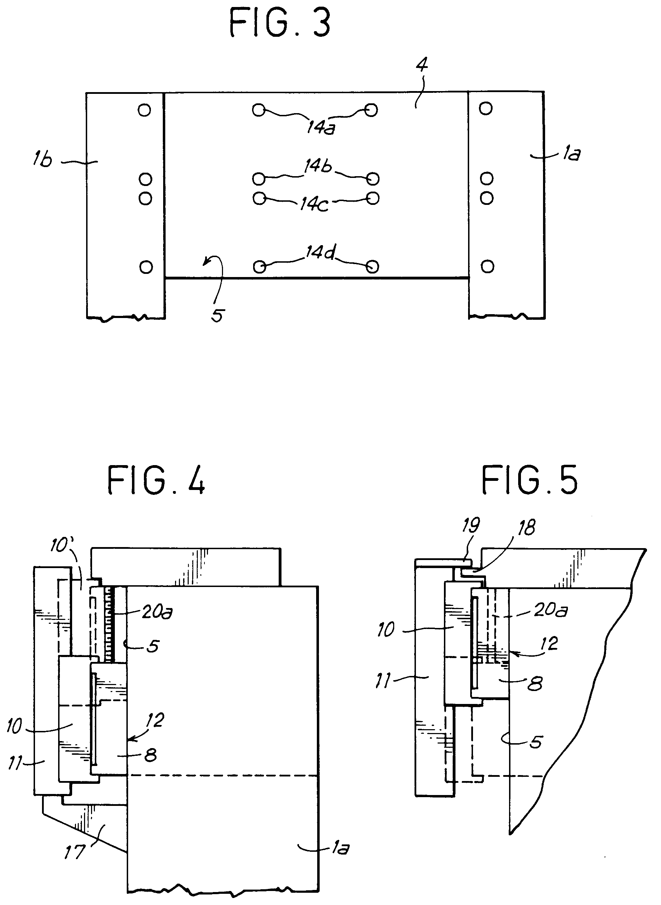

Selon un premier mode de réalisation représenté sur la figure 4, ces moyens de soutien comportent une console 17 fixée sur le montant 1a et sur laquelle on peut faire reposer l'organe porte-outil 11.

Selon un deuxième mode de réalisation représenté sur la figure 5, les moyens de soutien comportent une potence 18 fixée sur la face supérieure du portique 7 qui est susceptible de coopérer avec une patte d'accrochage 19 prévue dans la partie supérieure de l'organe porte-outil 11. Le déplacement vertical de la traverse 8 est obtenu au moyen de deux vis ou vérins 20a et 20b entraînés en synchronisation et disposés dans le plan vertical central de la traverse 8.

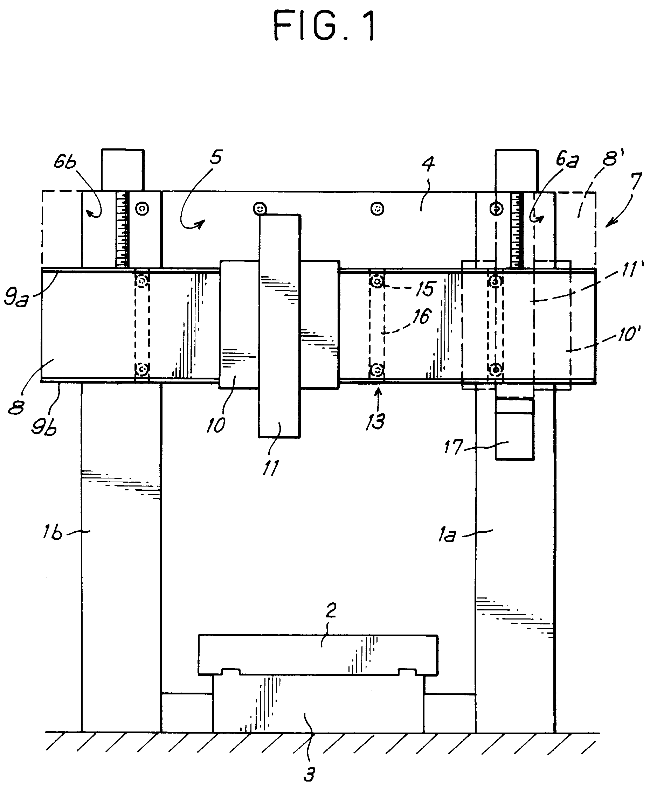

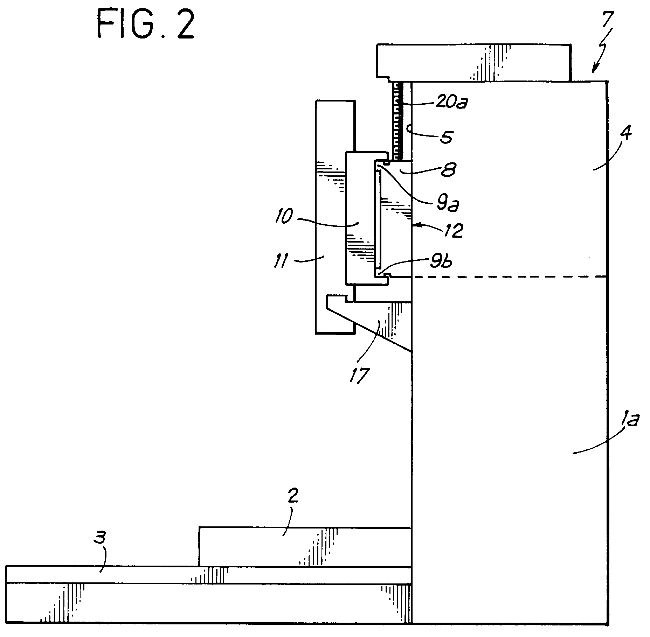

Les figures 1 et 2 montrent la traverse 8 dans sa position de travail inférieure, la traverse 8 étant positivement en appui sur les butées inférieures et les vérins 14b et 14 d étant serrés. Dans cette position, la traverse 8 fait corps avec le portique 7, sa face arrière 12 étant en appui sur les faces avant 6a et 6b des montants 1a et 1b, et sur la face avant 5 de l'entretoise 4. Pour déplacer la traverse 8 vers le haut on procède de la manière décrite ci-après.

On remonte l'organe porte-outil 11. on déplace le chariot vers le montant 1a jusqu'à ce que l'organe porte-outil 11 se trouve au-dessus de la console 17. On descend l'organe porte-outil 11 afin qu'il repose sur la console 17. On desserre les vérins 14b et 14d. On actionne les vis 20a et 20b en synchronisme ce qui a pour effet de faire remonter la traverse 8 et le chariot 10, l'organe porte-outil 11 restant fixe sur la console 17 et coulissant dans les glissières verticales du chariot 10. Lorsque la traverse 8 est positivement en appui sur les butées supérieures, on actionne les vérins 14a et 14c afin de bloquer la traverse 8 dans la position de travail supérieure. On remonte légèrement l'organe porte-outil 11 pour qu'il ne repose plus sur la console 17, puis on déplace le chariot 10 vers une position de travail située au-dessus de la table 2.

Sur les dessins, la référence 10' représente le chariot en position au-dessus de la console 17. La référence 11' représente l'organe porte-outil lorsqu'il repose sur la console 17 et la référence 8' représente la traverse dans la position haute.

Lorsque la console 17 est remplacée par la potence 18 et la patte d'accrochage 19, le processus pour déplacer la traverse 8 est identique au processus décrit ci-dessus si ce n'est que l'on suspend l'organe porte-outil 11 à la potence 18 au lieu de la faire reposer sur la console 17. Naturellement, il faut que la traverse 8 ait une course inférieure à la course de l'organe porte-outil, ce qui est habituellement le cas.

Les moyens de soutien de l'organe porte-outil 11 permettent de libérer la traverse 8 du poids de cet organe pendant son déplacement vertical. Cette disposition permet de supprimer les glissières habituellement utilisées pour le support et le guidage de la traverse 8.

Lorsque l'on veut déplacer la traverse vers le bas, on procède également de la manière décrite ci-dessus. On fait supporter l'organe porte-outil 11 par la console 17 ou la potence 18 avant de desserrer les vérins 14a et 14c.

Pendant le déplacement vertical de la traverse 8, les têtes de blocage 15 coulissent librement dans les rainures 16 de la traverse 8.

Dans le mode de fonctionnement décrit ci-dessus, il est prévu deux positions de travail, une position haute dans laquelle la traverse 8 est en appui sur les butées supérieures et une position haute dans laquelle la traverse 8 est en appui sur les butées inférieures. Les butées permettent d'assurer positivement un positionnement précis avant blocage. il va de soi que l'invention concerne également une fraiseuse-aléseuse telle que celle décrite ci-dessus, dans laquelle la traverse 8 peut être fixée sur le portique 7 dans une position intermédiaire quelconque entre la position haute et la position basse.

La description faite ci-dessus se rapporte à une fraiseuse-aléseuse verticale comportant un portique fixe et une table mobile. L'invention concerne également une fraiseuse-aléseuse à portique mobile et à table fixe.

## Revendications

1. Fraiseuse-aléseuse verticale à portique comprenant une table inférieure (2) destinée à supporter les pièces à usiner, un portique (7) comportant deux montants (1a, 1b) disposés de part et d'autre de la table (2) et une entretoise (4) reliant les extrémités supérieures desdits montants (1a, 1b), une traverse (8) supportée par ledit portique (7) et mobile verticalement le long desdits montants(1a, 1b), un chariot (10) supporté par ladite traverse (8) et mobile horizontalement et un organe porte-outil (11) monté mobile verticalement sur ledit chariot (10), ladite table (2) et ledit portique (7) étant susceptibles de se déplacer l'un par rapport à l'autre, caractérisée
en ce que l'entretoise (4) présente une face avant (5) plane située dans le plan des faces avant (6a, 6b) des montants (1a, 1b),
en ce que la traverse (8) est déplaçable verticalement uniquement le long de la face avant (5) de ladite entretoise (4), et
en ce que la face arrière (12) de la traverse (8) est maintenue en appui sur la face avant (5) de l'entretoise (4) et sur les faces avant (6a, 6b) des montants (1a, 1b) au moins pendant les phases d'usinage par des moyens de blocage.

2. Fraiseuse-aléseuse selon la revendication 1, caractérisée en ce que le portique (7) comporte de plus des moyens de soutien (17, 18) de l'organe porte-outil (11), lesdits moyens étant destinés à supporter le poids dudit organe porte-outil (11) pendant le déplacement vertical de ladite traverse (8).

3. Fraiseuse-aléseuse selon la revendication 2 caractérisée en ce que les moyens de soutien (17, 18) de l'organe porte-outil (11) comportent une potence (18) fixe montée sur la face supérieure du portique (7) et une patte d'accrochage (19) prévue dans la partie supérieure de l'organe porte-outil (11), ladite patte (19) étant susceptible de reposer sur ladite potence (18).

4. Fraiseuse-aléseuse selon la revendication 2, caractérisée en ce que les moyens de soutien de l'organe porte-outil (11) comportent une console (17) fixée à l'un des montants (1a, 1b) et sur lequel l'organe porte-outil (11) est susceptible de reposer.

5. Fraiseuse-aléseuse selon l'une quelconque des revendications 1 à 4, caractérisée en ce que les moyens de blocage comportent une pluralité de lignes (13) de vérins (14a, 14b, 14c, 14d) réparties le long de la traverse (8), lesdits vérins actionnant des têtes de serrage (15) susceptibles de coulisser dans des rainures (16) verticales pendant le déplacement vertical de la traverse (8).

6. Fraiseuse-aléseuse selon la revendication 5 caractérisée en ce que les vérins (14a, 14b, 14c, 14d) sont montés sur le portique (7).

7. Fraiseuse-aléseuse selon l'une des revendications 1 à 6, caractérisée en ce qu'elle comporte de plus des butées supérieures et des butées inférieures pour délimiter la course verticale de la traverse (8).

8. Fraiseuse aléseuse selon la revendication 7, caractérisée en ce que, pendant les phases d'usinage, la traverse (8) est en appui soit sur les butées supérieures, soit sur les butées inférieures.

## Claims

1. A vertical portal milling and boring machine comprising a lower table (2) intended to support the parts to be machined, a portal (7) comprising two uprights (1a, 1b) arranged on either side of the table (2) and a distance piece (4) connecting the upper ends of said uprights (1a, 1b), a crosspiece (8) supported by said portal (7) and movable vertically along said uprights (1a, 1b), a saddle (10) supported by said crosspiece (8) and movable horizontally and a tool holder (11) mounted so as to be movable vertically over said saddle (10), said table (2) and said portal (7) being capable of being displaced relative to one another, characterised
- in that the distance piece (4) has a plane front face (5) located in the plane of the front faces (6a, 6b) of the uprights (1a, 1b),
- in that the crosspiece (8) can be displaced vertically solely along the front face (5) of said distance piece (4), and
- in that the rear face (12) of the crosspiece (8) is held so as to bear against the front face (5) of the distance piece (4) and against the front faces (6a, 6b) of the uprights (1a, 1b) at least during the machining phases by locking means.

2. A milling and boring machine according to Claim 1, characterised in that the portal (7) further comprises support means (17, 18) for the tool holder (11), said means being intended to support the weight of said tool holder (11) during the vertical displacement of said crosspiece (8).

3. A milling and boring machine according to Claim 2 characterised in that the support means (17, 18) of the tool holder (11) comprise a fixed arm (18) mounted on the upper face of the portal (7) and a fastening lug (19) provided in the upper portion of the tool holder (11), said lug (19) being capable of resting on said arm (18).

4. A milling and boring machine according to Claim 2, characterised in that the support means of the tool holder (11) comprise a bracket (17) fastened to one of the uprights (1a, 1b) and on which the tool holder (11) is capable of resting.

5. A milling and boring machine according to any one of Claims 1 to 4, characterised in that the locking means comprise a plurality of lines (13) of jacks (14a, 14b, 14c, 14d) distributed along the crosspiece (8), said jacks actuating the tightening heads (15) that are capable of sliding inside vertical grooves (16) during the vertical displacement of the crosspiece (8).

6. A milling and boring machine according to Claim 5 characterised in that the jacks (14a, 14b, 14c, 14d) are mounted on the portal (7).

7. A milling and boring machine according to one of Claims 1 to 6, characterised in that it further comprises upper stops and lower stops to delimit the vertical travel of the crosspiece (8).

8. A milling and boring machine according to Claim 7, characterised in that, during the machining phases, the crosspiece (8) bears either against the upper stops or against the lower stops.

## Patentansprüche

1. Senkrechte Portal-Fräs- und Bohrmaschine mit einem unteren Tisch (2) zum Abstützen der Werkstücke, einem Portal (7) mit zwei auf je einer Seite des Tisches (2) angeordneten Ständern (1a, 1b) und einem die oberen Endstücke der Ständer (1a, 1b) verbindenden Zwischenträger (4), einem vom Portal (7) getragenen und an den Ständern (1a, 1b) höhenverstellbaren Querbalken (8), einem vom Querbalken (8) getragenen und waagerecht verstellbaren Schlitten (10) und einem auf dem Schlitten (10) senkrecht verstellbar angeordneten Werkzeugsupport (11), wobei der Tisch (2) und das Portal (7) relativ zueinander verstellbar sind,
dadurch gekennzeichnet, daß
der Zwischenträger (4) eine ebene Vorderseite (5) aufweist, die in der Ebene der Vorderseiten (6a, 6b) der Ständer (1a, 1b) angeordnet ist,
der Querbalken (8) nur an der Vorderseite (5) des Zwischenträgers (4) höhenverstellbar ist, und
die Rückseite (12) des Querbalkens (8) an der Vorderseite (5) des Zwischenträgers (4) und an den Vorderseiten (6a, 6b) der Ständer (1a, 1b) zumindest während der Bearbeitungsphasen durch Blockiermittel in Anlage gehalten ist.

2. Fräs- und Bohrmaschine nach Anspruch 1,
dadurch gekennzeichnet, daß das Portal (7) ferner Abstützvorrichtungen (17, 18) für den Werkzeugsupport (11) aufweist, wobei die genannten Vorrichtungen zum Abstützen des Gewichts des Werkzeugsupports (11) während der Höhenverstellung des Querbalkens (8) bestimmt sind.

3. Fräs- und Bohrmaschine nach Anspruch 2,
dadurch gekennzeichnet, daß die Abstützvorrichtungen (17, 18) für den Werkzeugsupport (11) einen feststehenden Ausleger (18), der auf der Oberseite des Portals (7) angeordnet ist, und einen Befestigungsbock (19) umfassen, der im oberen Abschnitt des Werkzeugsupports (11) vorgesehen ist, wobei der Bock (19) auf dem Ausleger (18) aufzuruhen vermag.

4. Fräs- und Bohrmaschine nach Anspruch 2,
dadurch gekennzeichnet, daß die Abstützeinrichtungen für den Werkzeugsupport (11) eine an einem der Ständer (1a, 1b) befestigte Konsole (17) umfassen, auf welcher der Werkzeugsupport (11) aufzuruhen vermag.

5. Fräs- und Bohrmaschine nach einem der Ansprüche 1 bis 4,
dadurch gekennzeichnet, daß die Blockiermittel mehrere Reihen (13) Arbeitszylinder (14a, 14b, 14c, 14d) umfassen, die entlang dem Querbalken (8) verteilt angeordnet sind, wobei die Arbeitszylinder Spannköpfe (15) betätigen, die während der Höhenverstellung des Querbalkens (8) in senkrechten Nuten (16) verschiebbar sind.

6. Fräs- und Bohrmaschine nach Anspruch 5,
dadurch gekennzeichnet, daß die Arbeitszylinder (14a, 14b, 14c, 14d) am Portal (7) angeordnet sind.

7. Fräs- und Bohrmaschine nach einem der Ansprüche 1 bis 6,
dadurch gekennzeichnet, daß sie ferner obere und untere Anschläge zur Begrenzung des senkrechten Verstellweges des Querbalkens (8) aufweist.

8. Fräs- und Bohrmaschine nach Anspruch 7,
dadurch gekennzeichnet, daß sich der Querbalken (8) während der Bearbeitungsphasen entweder an den oberen oder an den unteren Anschlägen abstützt.
